# EUROPEAN PATENT APPLICATION

(11) **EP 2 405 431 A1**
(43) Date of publication of application: **11.01.2012**
(21) Application number: 10305737.8
(22) Date of filing: 05.07.2010
(51) Int. Cl.: G11B 20/00

(54) **Optical medium enabling copy detection, copy detection device and method, and optical media manufacture method and system**

(71) Applicant: Thomson Licensing, 92130 Issy-les-Moulineaux (FR)
(72) Inventor: Karroumi, Mohamed, 92443, Issy-Les-Moulineaux (FR)
(74) Representative: Ruellan-Lemonnier, Brigitte

(57) **Abstract**

An optical medium (100; 670) enabling distinction between the optical medium (100; 670) and a copy thereof comprises data written in sectors of the optical medium (100; 670), wherein the sector number of at least one sector is modified from sequential numbering. To determine whether the optical medium (100; 670), accessed by an optical drive (110), is an original, an authentication device (800) requests (910), from the optical drive (110), lecture of a sector having a specific sector number; receives (920), from the optical drive (110), a response corresponding to lecture of the sector having the specific sector number; and determines (930) that the optical medium (100; 670) is original if the response corresponds to the expected response for the original. Also provided are an authentication device (800) and a method and system (700) for manufacturing such optical media.

## Description

### TECHNICAL FIELD

The present invention relates generally to optical storage media and in particular authentication of such media.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Protection of pre-recorded optical storage media - such as Compact Discs (CDs), Digital Versatile Discs (DVDs), High Definition Digital Versatile Discs (HD DVDs) and Blu-ray discs - may be divided into at least two related groups: copy protection and authentication.

The aim of copy protection is to make sure that the media may not be copied, while the goal of authentication is to determine whether a certain medium is genuine or not, i.e. whether it is an original or a copy thereof.

In order to understand how such protection may be achieved, it is important to understand how optical readers function. For example, a disc player on a Personal Computer (PC) comprises two main components: an optical drive and playback software. Simplifying somewhat, it may be said that the optical drive is responsible for reading the data stored on the disc, while the playback software treats the read data.

Normally, the optical reader functions well, but there may be problems in case the disc is physically damaged. Such damage, for example a scratch, may 'obscure' the stored data and therefore corrupt the reading of the data. To overcome this problem, the optical medium is recorded with additional data in the form of error correcting symbols. When reading the media, the disc player may use these symbols to correct errors. There are a fixed number of predetermined correcting symbols known as an error correction codewords (ECCs). The error correction is performed by the firmware of the optical drive while the playback software handles data decoding.

Error correction codewords are also used by DVD copy protection technologies such as Macrovision's RipGuard technology and Sony's Advanced Regional Copy Control Operating Solution (ARccOS). These technologies intentionally introduce errors in precise locations on the disc: a number of sectors filled with corrupted data and incorrect ECC blocks are embedded during manufacture. A normal DVD optical drive reads sector over and over again until a maximum number of retries is exceeded (the number may vary from drive to drive) and then considers the sector as "bad". The DVD drive does not provide bad sectors to the playback software. Copying software thus fails since it tries to copy all the sectors of the disc including the bad sectors, but never manages to obtain the bad sectors from the optical drive.

These copy protection schemes are not only useful to prevent copying, but also to authenticate a DVD, i.e. to determine if it is genuine or a copy. Indeed, a disc is deemed authentic if bad sectors cannot be read. Conversely, if the bad sectors are read correctly then the disc is considered as an unauthorized copy in which the bad sectors have been doctored.

A main drawback with these "bad sector" schemes is that protected discs are not always playable by disc players.

It will thus be appreciated that there is a need for an improved solution that enables to distinguish between a genuine original disc and a copy thereof. The present invention provides such a solution.

### SUMMARY OF INVENTION

In a first aspect, the invention is directed to a method of determining whether an optical medium is an original, the optical medium being accessed by an optical drive. An authentication device requests, from the optical drive, lecture of a sector having a specific sector number; receives, from the optical drive, a response corresponding to lecture of the sector having the specific sector number; and determines that the optical medium is original if the response corresponds to the expected response for the original. The original comprises modified sector numbering for at least one sector.

In a first preferred embodiment, the determination further comprises determining that the optical medium is a copy if the response corresponds to an expected response for a copy. It is advantageous that the modified sector numbering on the original comprises a skipped sector number, and the expected response for the original is that the sector could not be found and the expected response for a copy is null data. It is alternatively advantageous that the modified sector numbering on the original comprises a duplicated sector number with a number lower than the specific sector number, and the expected response for the original is equal to the expected response of a higher numbered sector of a copy. It is further alternatively advantageous that the modified sector numbering on the original comprises permutation of a first sector number and a second sector number, and that the expected response for the original is that the sector could not be found, the sector being located at a distance from the second sector number after permutation of at most a number of sectors corresponding to a landing distance of the optical drive, and the expected response for a copy is data written during manufacture.

In a second preferred embodiment, the sector with the modified sector numbering on the original belongs to an Error Correction Code block in which at least one other sector is similarly modified.

In a second aspect, the invention is directed to an authentication device for determining whether an optical medium is an original, the optical medium being accessed by an optical drive. The authentication device comprises a processor adapted to request, from the optical drive, lecture of a sector having a specific sector number; receive, from the optical drive, a response corresponding to lecture of the sector having the specific sector number; and determine that the optical medium is original if the response corresponds to the expected response for the original. The original comprises modified sector numbering for at least one sector.

In a third aspect, the invention is directed to a method of creating an original optical medium enabling distinction between the original optical medium and a copy thereof. A manufacture system obtains data to be burned on the original optical disc; modifies, before calculation of correcting codes, the sector number of at least one sector; and writes the data in sectors, of which at least one has a modified sector number, and the correcting codes on the optical medium.

In a first preferred embodiment, the sector numbering modification comprises skipping a sector number.

In a second preferred embodiment, the sector numbering modification comprises duplicating a sector number, resulting in two sectors sharing a sector number, and the data to be written in one of the two sectors is different from the data to be written in the other of the two sectors.

In a third preferred embodiment, the sector numbering modification comprises permutation of a low sector number and a high sector number.

In a fourth aspect, the invention is directed to a manufacture system for creating an original optical medium enabling distinction between the original optical medium and a copy thereof. The manufacture system comprises a processor adapted to obtain data to be burned on the original optical medium and modify, before calculation of correcting codes, the sector number of at least one sector; and a burner for writing the data in sectors, of which at least one has a modified sector number, and the correcting codes on the optical medium.

In a fifth aspect, the invention is directed to an optical medium enabling distinction between the optical medium and a copy thereof. The optical medium comprises data written in sectors of the optical medium, wherein the sector number of at least one sector is modified from sequential numbering, and error correcting codes calculated over the sectors after modification.

In a first preferred embodiment, the sector number is modified by skipping a sector number or by permuting at least a low sector number and a high sector number.

In a second preferred embodiment, two sectors share a sector number and the data in one of the two sectors is different from the data in the other of the two sectors.

### BRIEF DESCRIPTION OF DRAWINGS

Preferred features of the present invention will now be described, by way of non-limiting example, with reference to the accompanying drawings, in which:
Figure 1 illustrates a prior art DVD;
Figure 2 illustrates sector number modification of a first preferred embodiment;
Figure 3 illustrates sector number modification of a second preferred embodiment;
Figure 4 illustrates sector number modification of a variant of the second preferred embodiment;
Figure 5 illustrates the third preferred embodiment;
Figure 6 illustrates limitations of the third preferred embodiment;
Figure 7 illustrates a method of optical disc manufacturing according to a preferred embodiment of the present invention;
Figure 8 illustrates a system for optical disc manufacturing according to a preferred embodiment of the present invention;
Figure 9 illustrates a method of authenticating an optical disc according to a preferred embodiment of the present invention; and
Figure 10 illustrates a system for authenticating an optical disc according to a preferred embodiment of the present invention.

### DESCRIPTION OF EMBODIMENTS

The description will use DVDs as an illustrative example, but it will be appreciated that the invention is in no way limited thereto; in particular, it may be extended to other suitable kinds of optical discs.

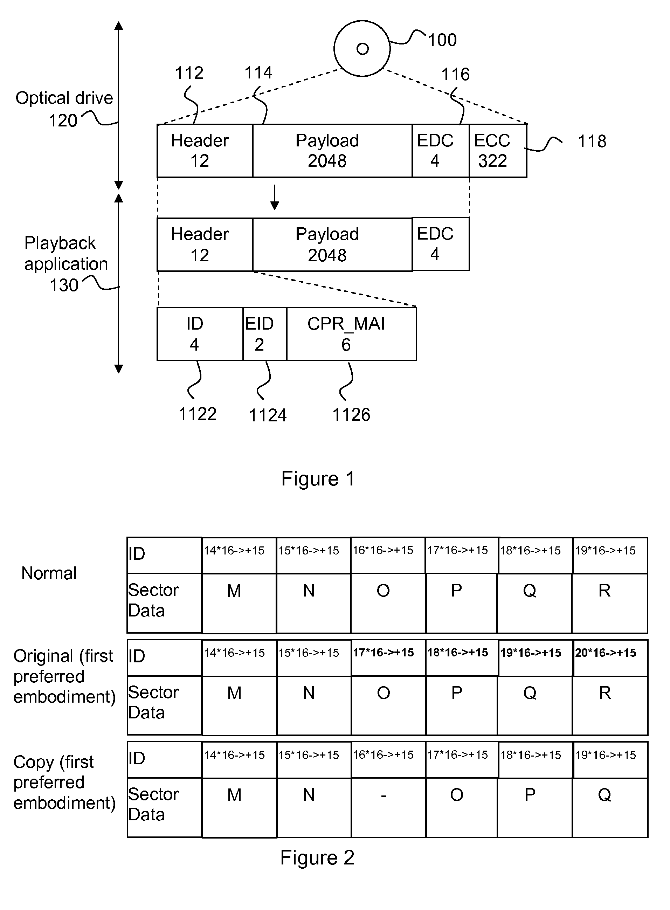

Figure 1 schematically illustrates a prior art DVD 100. The DVD 100 comprises 'raw' data in a plurality of recording frames measuring 2366 bytes. A recording frame comprises a sector 110, measuring 2064 bytes, and 322 bytes of Error Correction Code 118. The sector 110 comprises a 12-byte header 112, up to 2048 bytes of frame data (user data) 114 and 4 bytes of Error Detection Codes (EDC) 116.

The ECC 118 is generated as follows. Each set of 16 consecutive sectors are grouped into an ECC block having 208-byte rows and 182-byte columns. Outer parity (PO) Reed-Solomon correction codes are calculated for the columns of user data and inner parity (PI) Reed-Solomon correction codes are calculated for the rows of user data and PO codes.

The Parity allows the optical drive 120 to correct at least 5 defective bytes in each row and at least 8 defective bytes in each column. After the ECC block is formed, the PO codes are interleaved with the data giving 12 rows of ECC block data followed by one row of parity check code, i.e. 13 rows of 182 bytes. This block of 13*182 = 2366 bytes within an ECC block represents one recording frame before the addition of synchronization signals. An ECC block yields to 16 recording frames.

Each recording frame is divided into two equal parts of 91 bytes, and a 32-bit synchronization (SY) Code is added to each group of 91 bytes. The pattern of this SY Code field is XXXXXXXXXX0001000000000000010001 in binary notation. There are a total of eight types of SY Codes ranging from SY0 to SY7. The recording frame together with the synchronization code represents the physical sector and the manner in which the data are actually written into the DVD.

During playback, the ID information following the SY0 at the beginning of the block is read and recognized as an address that corresponds to the ID of the data sector. The beginning of the physical sector (i.e. SY0, and ID) plays an important role in decoding the data. Since the individual rows are uniquely identifiable in the sector structure, by the pattern of cyclically repeating SY1 through SY4 and SY5 through SY7 codes, several rows can be read at a time and the location of a coming SY0 can be calculated from the periodicity of the rows' SY Codes. This makes it possible to interpolate and read the next ID, even if for some reason the SY0 code is unreadable.

As ECC are generated over 16 sectors, an optical drive 120 reads then at least 16 sectors at a time and uses the ECC 118 for error correction. It afterward delivers the 2064 bytes sector requested by playback application 130. The playback application 130 descrambles the 2048 bytes frame sector if necessary. Next it uses the EDC 116 for a second error correction, decodes and displays the descrambled frame.

Existing disc drives use standard numbering when burning recordable discs. A main inventive idea of the present invention is to modify the natural (i.e. incrementally increasing) order of the sector numbers on an original disc to make it non-standard. As will be seen, this will generate sector numbers that are different between an original disc and its copy.

When the optical drive 120 receives a seek command (i.e. a command to find a sector), it first computes the relative angle and distance that the laser head should be moved to reach the target sector. In order to allow for inaccuracies, the laser head is not directed straight to the precise target sector, but to a number of sectors before, generally 128 but this number may change from drive to drive). Then the laser head sequentially reads the sector number from the ID information 1122 of the encountered sectors, normally moving forward 16 sectors at a time until it reaches the 16 sectors containing the target sector. The optical drive 120 then reads the 16 sectors containing target sector and uses the ECC 118 for error correction. If there is no error it delivers the 2064 bytes sector to playback application 130.

The functioning of the seek process may thus be exploited to authenticate genuine discs (and, conversely, to detect copies). If some sector numbers are modified during disc mastering, this causes the seek process to behave differently on an original disc than on a copy. For example, and as will be seen in detail hereinafter, sectors on the original disc might not be found, whereas they are found on copy thereof. Another example, that will also be seen in detail hereinafter, is that two sectors having the same number on the original and on its copy may contain different data.

### First preferred embodiment

In the first preferred embodiment, at least one sector number is omitted on the original DVD 100 during manufacture. Figure 2 illustrates sectors according to the first preferred embodiment.

Topmost in Figure 2 is shown the normal (sequential) section numbering, wherein exemplary sectors having numbers in the range [14*16; 19*16+15] comprise data M-R. Letters are given by way of example and each represents frames data for a set of 16 sectors, which numbers are comprised between 16**i* and 16**i*+15. The middle illustrates the skipping of sector numbers: numbers in the range [16*16; 16*16+15] are omitted; the sector numbers jump from 15*16+15 to 17*16. On this 'original' disc, sectors in [14*16;15*16+15] comprise data M-N, while sectors in [17*16; 20*16+15] comprise data O-R. As can be seen, the sectors comprise the same data; it is just the numbering that changes.

When the optical drive 120 tries to read from sector 16*16 on such a 'modified' disc, the seek operation fails and an error message is received.

Normally, although ordinary DVD copiers (such as the ones used in PCs, not the ones used in DVD manufacturing) write all 2366 bytes to each sector (including the ECC code), only 2048 bytes of user data are transferred to the drive by the copier software (user level application). The 4-byte data ID information, 2-byte IED information, and a 6-byte reserve field are computed and arranged at the head of 2048 bytes by the drive firmware. The drive firmware also computes the 4-byte EDC data and puts this at the end of the sector information, thus forming all the data of a sector. This step is repeated 16 times until after the 16^{th} 2048 byte sector is received from the user level application. Then, the drive firmware generates PO and PI Reed Solomon correction codes to produce an ECC block of 16 formatted sectors. It also performs the interleaving process as described earlier to produce 16 recording frames and finally it adds synchronization signals to obtain the 16 physical sectors that are burnt onto the DVD.

Therefore, when copying this modified DVD, a classical copier does not use the numbering of the original DVD but the standard numbering. This means that even if sectors in [16*16; 16*16+15] on the source DVD cannot be found, the recorder creates these sectors on the copy, but puts null in them. This is shown in the lower part of Figure 2: sectors [14*16;15*16+16] are filled with data M-N (just as in the original), sectors between 16*16 and 16*16+15 are empty (i.e. null), and sectors [17*16;19*16+15] are filled with data O-Q.

It can thus be seen that when an optical drive 120 is instructed to read sectors between 16*16 and 16*16+15 on a copied disc, the seek operation is successful, and null data are returned. This makes it possible to distinguish between an original DVD and a copy.

### Second preferred embodiment

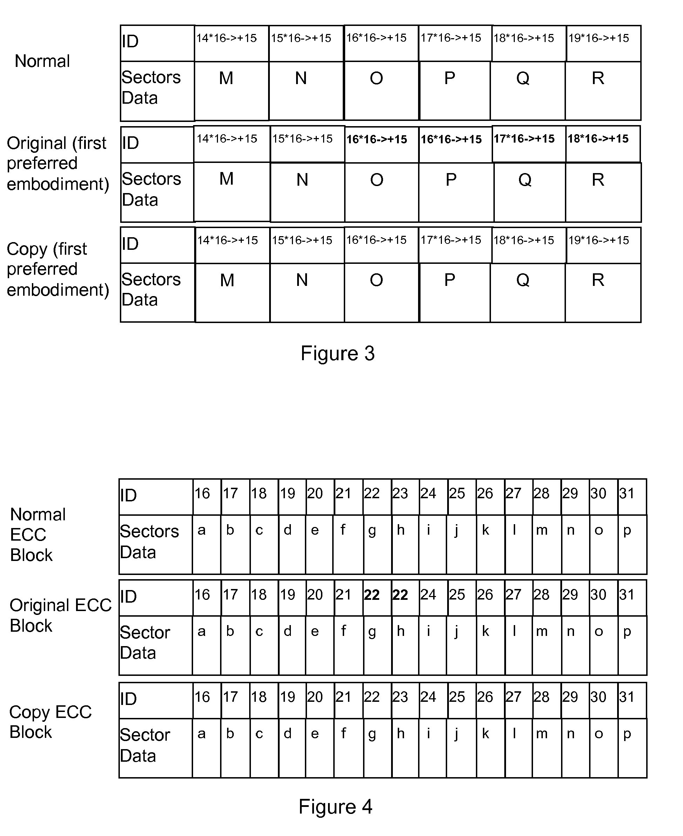

In the second preferred embodiment, illustrated in Figure 3, the sector number of at least one ECC block is duplicated, i.e. it appears twice, preferably one ECC block just after the other. In this illustrative example, sector numbers in the range [16*16; 16*16+15] appears twice on the original. Sectors in [14*16-15*16+15] comprise data M-N, the 'first' 16 sectors [16*16; 16*16+15] contain data O, the 'second' 16 sectors [16*16; 16*16+15] data P, and sectors [17*16-18*16+15] data Q-R.

When the optical drive 120 is instructed to read from sector 16*16 on such a modified disc, it always returns the data of the first encountered 16 sectors, which is O in our example. The 'second' 16 sectors are not found because the seek process works only in forward direction.

However, when copying a DVD, the sectors are read sequentially, which means that 'second' sectors [16*16; 16*16+15] are found, but as the normal sector numbering is used when the data is recorded, this causes a shift 'to the right' of the sectors numbers. The lower part of Figure 3 illustrates this: the data (M-O) from sectors in [14*16;15*16+15] and 'first' sectors [16*16, 16*16+15] are stored in sectors [14*16; 16*16+15], the data "P" from 'second' 16 sectors [16*16, 16*16+15] are stored in sectors [17*16; 17*16+15], and the data (Q-R) from sectors [17*16;18*16+15] are stored in sectors [18*16; 19*16+15].

Therefore, when the optical drive 120 is instructed to read the 16 sectors [17*16; 17*16+15], it returns "Q" when reading the original disc and "P" when reading the copy. Since different results are obtained on the two supports, this permits to distinguish between the genuine original disc and its copy.

In this example, the number of 16 sectors [16*16, 16*16+15] was duplicated once, but it will be appreciated that this may be generalised to a plurality of duplications, so that there are three or more range of sectors with the same number. As in the first preferred embodiment, it is naturally also possible to duplicate the numbers for more than one range sector, e.g. to have two copies of sectors in range [16*16, 16*16+15], three copies for sectors in the range [20*16, 20*16+15], etc. In a variant of the second preferred embodiment, illustrated in Figure 4, the duplication of the number is not done at the ECC block level but at the sector level. In other words, sectors numbers are duplicated inside an ECC block; at least one sector number is duplicated, i.e. it appears twice, preferably one just after the other. In this illustrative example, sector 22 appears twice on the original. Sectors 16-21 comprise data a-f, the 'first' sector 22 data g, the 'second' sector 22 data h, and sectors 24-31 data i-p. Note that sector number 23 has been omitted, because an ECC block needs to have exactly 16 sectors. This variant can be viewed as combination of the first preferred embodiment and the second preferred embodiment, but inside an ECC block of 16 sectors.

When the optical drive 120 is instructed to read from sector 22 on such a modified disc, it then reads the 16 sectors containing the target sector and uses the ECC 118 for error correction. If there is no error, the drive firmware returns the data, 'g' in our example, of the first encountered sector in its buffer memory.

The 'second' sector 22 is however not in the memory of the drive firmware. Consequently, to get the 'second' sector 22, the user application must request sector 24 first, and then the sector 22. In this case the drive firmware seeks backward in its buffer memory and then returns data of the 'second' sector 22, which is 'h' in our example.

However, when copying a DVD, the sectors are recorded sequentially, using normal sector numbering for the recording of the data is recorded, which causes a replacement of the 'second' sector number 22 by the number 23. The lower part of Figure 4 illustrates this: the data (a-g) from sectors 16-21 and first sector 22 are stored in sectors 16-22, the data 'h' from second sector 22 is stored in sector 23, and the data (i-p) from sectors 24-31 are stored in sectors 24-31. Therefore, when the optical drive 120 is instructed to read sector 23, it returns error when reading the original disc and 'h' when reading the copy. Also, the 'second' sector 22 is not present anymore on the copy. Consequently, even if user application first requests sector 24 and then sector 22 (forcing the drive firmware to lookup backward in its memory), the drive firmware always returns 'g' for the copy. This is not the case for the original. Since different results are obtained on the two supports, this permits to distinguish between the genuine ECC block on the original disc and fake ECC block on the copy.

In this example, the number of one sector 22 was duplicated once, but it will be appreciated that this may be generalised to a plurality of duplications, so that there are three or more sectors with the same number (we can have for instance 16 sectors with the same ID number within an ECC block). As previously mentioned, it is naturally also possible to duplicate the numbers for more than one sector, e.g. to have two sector 16, three sector 17, etc. The duplicated sectors number should however be grouped in 16 sectors to fit in an ECC block. As a consequence, each duplication within an ECC block leads to a deletion of the next consecutive sector number. It is naturally also possible to duplicate sectors in more than one ECC block.

It should be noted that a further difference from the RipGuard and ARccOS technologies is that while these use incorrect ECCs in a number of sectors, the ECC of the second embodiment's 'duplicated' sectors are correct, which enables the data therein to be read.

### Third preferred embodiment

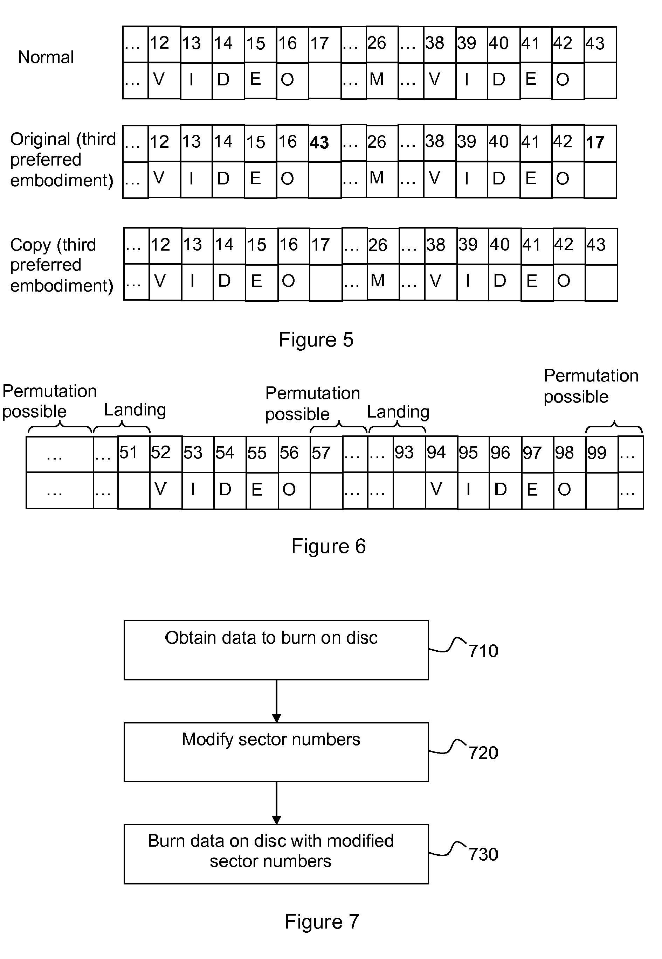

In the third preferred embodiment, illustrated in Figure 5, a plurality of sector numbers are permuted. As already mentioned, when seeking a target sector, the laser head lands a few sectors before target sector. It can be supposed that it lands 160-256 sectors before the target sector. Then the laser head reads the sector number of each following sector until it reaches the target sector. The drive then retrieves the 16 sectors containing the target sector and uses the ECC code for error correction. If there is no error, it delivers the 2064 bytes sector to the user application for playback.

For reasons of clarity, only one sector number for each set of 16 sectors is shown in the example. Sector n° *i* represents data for a set of 16 sectors whose numbers are comprised between 16**i* and 16**i*+15. The sectors [12*16; 16*16+15] and [38*16; 42*16+15] contain video data, sectors [17*16; 37*16+15] and sectors [43*16; 43*16+15] contain no useful video data (e.g. null), but sectors [26*16; 26*16+15] contain a predefined value 'M'. Further in the example, the places of sector numbers [17*16; 17*16+15] and [43*16; 43*16+15] are switched, i.e. sectors [17*16; 17*16+15] and [43*16; 43*16+15] are permuted on the original disc according to the third preferred embodiment.

When the optical drive 120 is told to seek sector within [26*16; 26*16+15], it starts a number of sectors before, e.g. from sector 12*16. However, the optical drive 110 never reaches the target sector in [26*16; 26*16+15], as the optical drive 120 reads sector numbers in [43*16; 43*16+15] immediately after sector 16*16+15, it considers that an error has occurred and that it is too far ahead. To correct, the optical drive 120 moves one track backward. Next, seeing that it is too far from the target sector in [26*16; 26*16+15], it jumps forward one track and lands 160-256 sectors before the wanted sector, which at least is sector number 16*16 (= 26*16 - 160). The optical drive 120 will then read sectors [43*16; 43*16+15] again, and again considers that an error has occurred, and repeats the process until it gives up after a number a retries without success, stops the seek process and sends an error message to the playback application 130.

When original disc of the third preferred embodiment is copied, normal copiers use standard numbering (as in the previous embodiments). This means that sector numbers [17*16; 17*16+15] and [43*16; 43*16+15] are switched back, resulting in a 'normal' disc. Therefore, when the optical drive 120 seeks a sector within [26*16; 26*16+15] on the copy, the operation succeeds and "M" is returned to the application layer 130, making it possible to discern between a genuine original disc and its copy.

To avoid playback problems of the original disc, the permutation should be performed only for sectors not containing video data. During video playback, data stored on the disc informs the driver to skip such unused sectors. In addition, sector number permutation should allow a safe 'landing distance' for the laser head such that sectors containing video data may be reached. This is illustrated in Figure 6. Video data is stored in sectors [52*16; 56*16+15] and [94*16; 98*16+15], while the remaining sectors comprise no video data. The left-most sectors in Figure 6 may be used for permutation, while it is not possible for a number of consecutive sectors including sector [51*16; 51*16+15], as these sectors should keep the normal numbering so as to enable landing during seek. The exact number of sectors depends on the implementation; as a non-limitative example, it may be prudent to 'save' 256 DVD sectors for this purpose as optical drives on DVD players land 160-256 sectors early. Similarly, ECC block from 57*16 and some and sectors from 99*16 and some may be permuted, while a number of sectors leading up to and including sectors [93*16; 93*16+15] are saved for landing.

Sector number permutation may be applied to many different sectors, the upper limit being all 'non-playable' sectors outside the 'landing' sectors. In the illustration, entire ECC blocks sector number were permuted. The method also works when permuting just a subset of sector numbers in an ECC block with a subset of sector numbers of another ECC block. It is naturally also possible to permute the numbers for two or more sectors inside the same ECC block.

As in the previous embodiments, the optical drive 120 behaves differently when reading an original disc and its copy: some sectors, e.g. sectors in [26*16; 26*16+15], are not found on the original disc. This makes it possible to distinguish between an original and the copy.

Since the originals and their copies may be distinguished between, it is possible to authenticate an original disc.

Figure 7 illustrates a method of optical disc manufacturing according to a preferred embodiment of the present invention. In step 710, the data to be burned on an optical disc is obtained. Then the sector numbers are modified 720, advantageously according to any one of the first, second and third embodiments, or a combination thereof. The required correcting codes, such as EDC and ECC, are then calculated. Finally, the data are burnt 730 in sectors, of which at least some have modified sector numbers, on the optical disc.

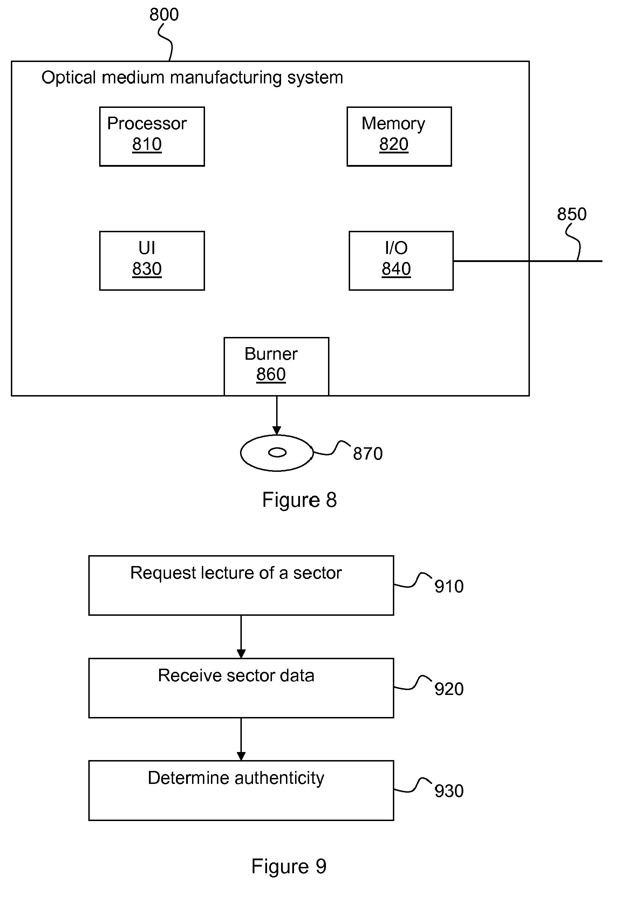

Figure 8 illustrates a system for optical disc manufacturing according to a preferred embodiment of the present invention. The exemplary optical medium manufacturing system 800, on which the algorithms of the present invention may be implemented, is preferably implemented as a stand-alone device, but it may also be implemented as a plurality of devices. The system 800 preferably comprises at least one processor 810, RAM memory 820, a user interface 830 for interacting with a user, a second interface 840 for interaction with other devices over connection 850, and a burner 860 for writing data an optical disc 870. The processor 810 is, among other things, programmed to modify section numbers according to any of the first, second, and third embodiment of the present invention or a combination thereof. The skilled person will appreciate that the illustrated devices are very simplified for reasons of clarity and that real devices in addition is likely to comprise features such as persistent storage devices.

Figure 9 illustrates a method of authenticating an optical disc according to a preferred embodiment of the present invention. First, lecture of a sector with a certain sector number is requested 910. The request is sent to an optical drive that may be co-located with or separate from the requesting device. The latter is particularly useful in the cases where a user who has bought an optical medium requests authentication by a server in order to be able to obtain something that is available only to owners of the original medium. The error correction codes are verified and, as the codes are correct, the sector data is delivered to a user application (running at the user level), which forwards it to authentication server for verification. It should be noted that this is quite different from the prior art "bad sector" method.

The data from the sector with the requested sector number are then received 920 and is determined 930 whether or not the optical medium is authentic or not, i.e. whether it is an original disc or a copy. The determination is made by comparison of the received data and the expected data and depends on which of the preferred embodiments of the present embodiment was used for the modification of the sector numbers. If the response corresponds to data expected on a copy (e.g. 'wrong' data), then it is determined that the disc is a copy; but if the response corresponds to data expected on the original (wherein the data may comprise an error signal), then it is determined that the disc is original.

Naturally, data may be requested from a plurality of sectors before authentication.

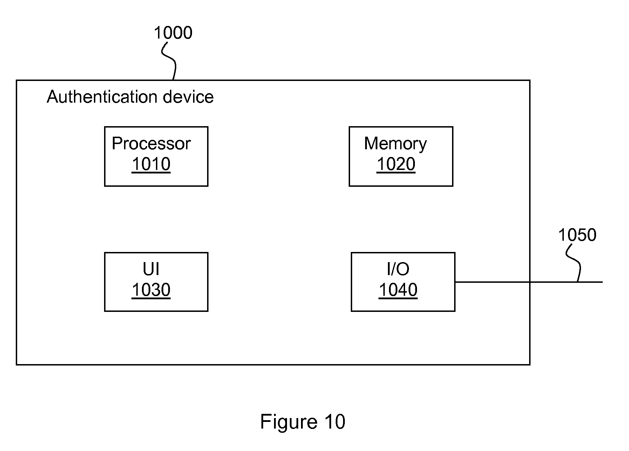

Figure 10 illustrates a device for authenticating an optical disc according to a preferred embodiment of the present invention. The authentication device 1000 preferably comprises at least one processor 1010, RAM memory 1020 (e.g. for storing expected responses), a user interface 1030 for interacting with a user, a second interface 1040 for interaction with optical drives over connection 1050. The processor 1010 is, among other things, programmed to perform the method illustrated in Figure 9. The skilled person will appreciate that the illustrated devices are very simplified for reasons of clarity and that real devices in addition is likely to comprise features such as persistent storage devices.

It will thus be appreciated that the invention can allow authentication of an optical medium (in particular optical discs such as DVD or Blu-Ray), i.e. whether a specific optical disc is original or not.

It will also be appreciated that most prior art anti-copy solutions operate at application level on a user's computer and they thus are prone to reverse engineering attacks. In particular, the bad sectors technique, which operates at driver level, comprises filling sectors with corrupted data which means that ECC encoding is erroneous; this may lead to problems when reading the video of that support.

In the present invention however, sectors are not filled with corrupted data and the assignation of sector numbers is done before EDC and ECC encoding. An advantage of this is that an optical drive can read such sectors correctly. The sector numbering is modified, which is to say that it differs from the natural (i.e. incrementally increasing) order of the sector numbers on an original disc to make the sector numbering non-standard.

It will further be appreciated that:
- authentication is based on specific modifications to a disc during manufacture;
- added data and/or modifications is difficult to copy on recordable/rewritable media;
- modified discs are playable by currently available players; and
- the authentication mechanism can use existing readers to access the (modified) data on the disc.

Each feature disclosed in the description and (where appropriate) the claims and drawings may be provided independently or in any appropriate combination. Features described as being implemented in hardware may also be implemented in software, and vice versa. Reference numerals appearing in the claims are by way of illustration only and shall have no limiting effect on the scope of the claims.

## Claims

1. A method of determining whether an optical medium (100; 670) is an original, the optical medium (100; 670) being accessed by an optical drive (110), the method being performed by an authentication device (800) and comprising the steps of:
- requesting (910), from the optical drive (110), lecture of a sector having a specific sector number;
- receiving (920), from the optical drive (110), a response corresponding to lecture of the sector having the specific sector number; and
- determining (930) that the optical medium (100; 670) is original if the response corresponds to the expected response for the original;
wherein the original comprises modified sector numbering for at least one sector.

2. The method of claim 1, wherein the determining step (930) further comprises determining that the optical medium (100; 670) is a copy if the response corresponds to an expected response for a copy.

3. The method of claim 2, wherein the modified sector numbering on the original comprises a skipped sector number, and wherein the expected response for the original is that the sector could not be found and the expected response for a copy is null data.

4. The method of claim 2, wherein the modified sector numbering on the original comprises a duplicated sector number with a number lower than the specific sector number, and wherein the expected response for the original is equal to the expected response of a higher numbered sector of a copy.

5. The method of claim 2, wherein the modified sector numbering on the original comprises permutation of a first sector number and a second sector number, and wherein the expected response for the original is that the sector could not be found, the sector being located at a distance from the second sector number after permutation of at most a number of sectors corresponding to a landing distance of the optical drive (110), and the expected response for a copy is data written during manufacture.

6. The method of claim 1, wherein the sector with the modified sector numbering on the original belongs to an Error Correction Code block in which at least one other sector is similarly modified.

7. An authentication device (800) for determining whether an optical medium (100; 670) is an original, the optical medium (100; 670) being accessed by an optical drive (110), the authentication device (800) comprising a processor (810) adapted to:
- request, from the optical drive (110), lecture of a sector having a specific sector number;
- receive, from the optical drive (110), a response corresponding to lecture of the sector having the specific sector number; and
- determine that the optical medium (100; 670) is original if the response corresponds to the expected response for the original;
wherein the original comprises modified sector numbering for at least one sector.

8. A method of creating an original optical medium (100; 670) enabling distinction between the original optical medium (100; 670) and a copy thereof, the method being performed by a manufacture system (700) and comprising the steps of:
- obtaining (610) data to be burned on the original optical disc (100; 670);
- modifying (620), before calculation of correcting codes, the sector number of at least one sector; and
- writing (630) the data in sectors, of which at least one has a modified sector number, and the correcting codes on the optical medium (100; 670).

9. The method of claim 8, wherein the sector numbering modification comprises skipping a sector number.

10. The method of claim 8, wherein the sector numbering modification comprises duplicating a sector number, resulting in two sectors sharing a sector number, and wherein the data to be written in one of the two sectors is different from the data to be written in the other of the two sectors.

11. The method of claim 8, wherein the sector numbering modification comprises permutation of a low sector number and a high sector number.

12. A manufacture system (700) for creating an original optical medium (100; 670) enabling distinction between the original optical medium (100; 670) and a copy thereof, the manufacture system (700) comprising:
a processor (710) adapted to:
- obtain data to be burned on the original optical medium (100; 670); and
- modify, before calculation of correcting codes, the sector number of at least one sector; and
a burner (760) for writing the data in sectors, of which at least one has a modified sector number, and the correcting codes on the optical medium (100; 670).

13. An optical medium (100; 670) enabling distinction between the optical medium (100; 670) and a copy thereof, the optical medium (100; 670) comprising data written in sectors of the optical medium (100; 670), wherein the sector number of at least one sector is modified from sequential numbering and error correcting codes calculated over the sectors after modification.

14. The optical medium (100; 670) of claim 13, wherein the sector number is modified by skipping a sector number or wherein at least a low sector number and a high sector number are permuted.

15. The optical medium (100; 670) of claim 13, wherein two sectors share a sector number, and wherein the data in one of the two sectors is different from the data in the other of the two sectors.
